# NEUE EUROPÄISCHE PATENTSCHRIFT

(11) **EP 1 182 177 B2**
(45) Veröffentlichungstag und Bekanntmachung des Hinweises auf die Entscheidung über den Einspruch: **01.04.2015**
(45) Hinweis auf die Patenterteilung: 15.10.2008
(21) Anmeldenummer: 01117083.4
(22) Anmeldetag: 13.07.2001
(51) Int. Cl.: C03C 25/12, C03C 25/26, D04H 1/70, C03C 25/14

(54) **Dämmstoffelement sowie Verfahren und Vorrichtung zur Herstellung eines Dämmstoffelements, insbesondere einer roll- und/oder wickelbaren Dämmstoffbahn aus Mineralfasern**
Insulating element, method and device for manufacturing insulating material and rollable mat of mineral fibres
Elément d'isolation , Procédé et installation pour la fabrication de matériaux isolants ainsi que nappe d'enveloppe en fibres minérales

(30) Priorität: 24.08.2000 DE 10041481
(43) Veröffentlichungstag der Anmeldung: 27.02.2002
(73) Patentinhaber: Deutsche Rockwool Mineralwoll GmbH & Co. OHG, 45966 Gladbeck (DE)
(72) Erfinder: Klose, Gerd-Rüdiger, Dr., 46286 Dorsten (DE)
(74) Vertreter: Wanischeck-Bergmann, Axel

(56) Entgegenhaltungen:
- EP-A- 0 374 112
- EP-A1- 0 375 486
- EP-A2- 0 277 500
- WO-A-92/10602
- WO-A-98/28233
- WO-A-99/51536
- WO-A-99/60041
- WO-A1-98/21266
- WO-A1-98/28501
- DE-A1- 3 612 857
- DE-A1- 3 940 896
- DE-C- 19 808 518
- DE-C1- 19 608 647

## Beschreibung

Die Erfindung betrifft ein Verfahren zur Herstellung eines Dämmstoffelementes, insbesondere einer roll- und wickelbaren Dämmstoffbahn aus Mineralfasern, vorzugsweise aus Steinwolle, bei dem Mineralfasern unter Zugabe von Bindemitteln auf einer Fördereinrichtung abgelegt und das Bindemittel anschließend ausgehärtet wird, wobei der Bindemittelgehalt der Mineralfasern nach dem Ablegen auf der Fördereinrichtung derart variiert wird, dass über die Breite des Dämmstoffelementes Bereiche ausgebildet werden, die einen erhöhten Bindemittelgehalt aufweisen. Ferner betrifft die Erfindung ein Dämmstoffelement aus mit Bindemitteln gebundenen Mineralfasern, insbesondere aus Steinwollefasern, vorzugsweise in Form einer wickelbaren, in einzelne Platten zu separierende Dämmstoffbahn aus Mineralfasern, bestehend aus einem insbesondere geradflächig begrenztem Körper mit zwei parallel zueinander und im Abstand angeordneten großen Oberflächen sowie insbesondere rechtwinklig zu den großen Oberflächen verlaufenden Seitenflächen und Stirnflächen, die ebenfalls rechtwinklig und im Abstand zueinander angeordnet und parallel verlaufend ausgerichtet sind.

Dämmstoffelemente in Form von Faserdämmstoffen bestehen aus natürlichen organischen Fasern. Weiterhin sind Mischungen verschiedener Faserarten miteinander möglich. Die größte Marktrelevanz haben Dämmstoffelemente aus Mineralwolle. Ihre wesentlichen Elementarteilchen sind glasig erstarrte Mineralfasern, die mit Hilfe geringer Mengen von Bindemitteln miteinander verbunden sind. Angestrebt wird eine punktweise Verbindung der einzelnen Mineralfasern, um ein elastisch-federndes Verhalten einer zu bildenden Fasermasse zu erzielen und im weiteren zu erhalten. Übliche Bindemittel sind beispielsweise Gemische aus duroplastisch aushärtenden Phenol-Formaldehyd-Harnstoffharzen, die in wässriger Lösung in der Fasermasse verteilt werden. Phenol-Formaldehyd-Harnstoffharze enthalten geringe Mengen an haftvermittelnden Substanzen. Hierbei handelt es sich zumeist um Silanverbindungen. Der Gehalt an brennbaren organischen Substanzen muß so niedrig wie möglich gehalten werden, um die Dämmstoffelemente als nichtbrennbar im Sinne von DIN 4102 Teil 1 deklarieren zu können. Alternativ zu Phenolharz-Formaldehyd-Harnstoffharzen können auch andere in Wasser, Wasser-Alkohol und ähnlichen, preiswerten Lösungsmitteln gelöste Harze wie Melaminharz, Epoxid-, Polyesterharze allein oder in Mischungen miteinander verwendet werden.

Mineralfasern werden auch mit Kieselsol gebunden, das in Form von nanoskalierten SiO₂-Partikeln in einem Netzwerk von Alkoysilanen eingebunden ist. Typische Beispiele für diese anorganischen Bindemittel werden beispielsweise in der WO 98/21266 beschrieben. Da neben den genannten Bindemitteln weitere Modifikationen bestehen, werden derartige Bindemittel im Folgenden allgemein auch als Nanokomposite oder Ormocere bezeichnet. Die Gelierzeit dieser Bindemittel kann entsprechend den Anforderungen der Herstellungsprozesse der Dämmstoffelemente in relativ weiten Bereichen verändert bzw. angepasst werden. In Abhängigkeit von ihren Anteilen in den Dämmstoffelementen zwischen ca. 2 bis 20 Masse-% ergibt sich eine flexible bis relativ spröd-harte Bindung. Die Aushärtezeit kann durch eine entsprechende Formulierung der Zusammensetzung in relativ weiten Grenzen variiert werden.

Mineralfasern werden durch Zerfaserung von silikatischen Schmelzen hergestellt. Die Temperaturen dieser Schmelzen liegen oberhalb von 1450° C bis 1500°C. Es werden handelsüblich Glas- und Steinwollefasern unterschieden.

Die Bezeichnungen haben wegen der Verwendung aller möglicher Rohstoffe und verwerteter Abfälle anderer Industrien keinen unmittelbar realen Hintergrund mehr. Die Bezeichnungen charakterisieren aber zwei unterschiedliche Mineralfaserdämmstoff-Typen.

Die Zusammensetzung der Schmelze bestimmt ganz wesentlich das zur Anwendung kommende Zerfaserungsverfahren. Die für Glasfasern in Frage kommenden Gläser weisen relativ hohe Gehalte an Alkalien und Bor-Oxiden auf und zeigen deshalb eine weniger ausgeprägte Abhängigkeit der Viskosität von der Temperatur. Dämmstoffelemente aus Glasfasern werden heute großtechnisch mit Hilfe des sogenannten TEL-Verfahrens hergestellt. Bei diesem Verfahren wird die Schmelze in einen rotierenden schüsselartigen Körper geleitet, dessen Seitenwände Bohrungen aufweisen. Durch diese Bohrungen tritt die Schmelze aus, wobei sich infolge der Zentrifugalkräfte in Verbindung mit einer raschen Abkühlung relativ lange glatte, glasig erstarrte Glasfasern bilden.

Die gebildeten Glasfasern werden in einem Fallschacht nach unten auf ein luftdurchlässiges Transportband geleitet und dort entsprechend der Leistung des Zerfaserungsaggregats und der Geschwindigkeit des Transportbands zu einer geschlossenen Schicht mit entsprechender Höhe aufgesammelt. Die Packungsdichte entspricht der natürlichen Rohdichte zuzüglich des Anpressdrucks aus der Durchströmung mit der Kühl- und Transportluft. Derartige Herstellungsverfahren sind beispielsweise aus der EP-A-0 375 486, EP-A-0 484 211, EP-A-0 551 476 oder der EP-A-0 484 211 bekannt.

Da die Leistungsfähigkeit derartiger Zerfaserungsaggregate nur einige hundert kg/h beträgt, werden gewöhnlich mehrere dieser Zerfaserungsaggregate hintereinander geschaltet, so dass sie eine Produktionslinie bilden.

Schmelzen zur Herstellung von Steinwollefasern enthalten große Mengen an Calcium- und Magnesium-Oxiden sowie nicht unbeträchtliche Anteile an Eisenoxiden. Steinwollefasern sind deshalb deutlich temperaturbeständiger als Glasfasern. Die Abhängigkeit der Viskosität der Schmelze zur Herstellung von Steinwollefasern von der Temperatur ist hoch. Die Anwendung des TEL-Verfahrens ist nicht, bzw. nur unter ganz speziellen Voraussetzungen möglich. Ein Verfahrensschema für die heute übliche Verfahrenstechnik zur Herstellung von Steinwollefasern ist in der WO 92/10602 dargestellt.

Die Herstellung der Steinwollefasern erfolgt ganz allgemein auf sogenannten Kaskaden-Zerfaserungsmaschinen. Diese bestehen zumeist aus drei oder vier Walzen, die mit hoher Umfangsgeschwindigkeit um horizontale Achsen rotieren. Die Schmelze zur Herstellung von Steinwollefasern wird nacheinander auf die Umfangsflächen der Walzen geleitet. Dabei lösen sich Partikel aus der Schmelze, die in Form von Steinwollefasern oder nicht faserigen, zumeist kugelförmigen Körpern erstarren. Die restliche Schmelze wird jeweils auf die nächste Walze geleitet. Das Ausbringen an Steinwollefasern erreicht ca. 50 Masse-%. Die mittleren Durchmesser der Steinwollefasern betragen ca. 2 - 3 µm und entsprechen damit dem Durchmesser der Glaswollefasern. Von den nichtfaserigen Partikeln verbleiben ca. 30 % in Form kleinster Perlen in der Fasermasse, während die gröberen Körper durch Windsichtung abgetrennt werden können.

Die Abschreckung der entstehenden Steinwollefasern erfolgt durch eine Verdampfung von Wasser und eine Abgabe von Wärmeenergie an relativ große Luftmengen. Wegen Brandgefahr sowie aus Kosten- und Umweltschutzgründen werden in Wasser lösliche Bindemittel-Systeme verwendet. Durch eine schlagartige Verdampfung entstehen sehr feine Aerosolen, die sich anschließend in Form feinster Tröpfchen auf der Oberfläche der Steinwollefasern niederschlagen. Dieser Vorgang muß instatu-nascendi der Mineralwollefasern erfolgen. Sobald sich die Mineralwollefasern in einer turbulenten Luftströmung zu Flocken zusammenballen, ist keine gleichmäßige Imprägnation mit Bindemitteln, insbesondere mit tröpfchenförmig verteilten Substanzen mehr möglich. In diesem Fall wirkt die Oberfläche jeder einzelnen Flocke wie ein hoch wirksames Feinfilter.

Bei Kaskaden-Zerfaserungsmaschinen für Steinwollefasern erfolgt die Bindemittel-Zugabe beispielsweise durch die horizontalen Achsen, die hohl ausgebildet sind. Obwohl die Steinwollefasern kurz und in sich verwirbelt sind, werden für ihre Bindung weniger als ca. 4,5 Masse-% des üblichen Phenol-Formaldehyd-Harnstoffharz-Gemisches benötigt, was auf eine sehr gute Dispersion des Bindemittels hinweist. Bei Glaswolle-Dämmstoffen erfolgt die BindemittelZugabe unterhalb des Zerfaserungsaggregats, so dass mit ca. 4 bis 8 Masse- % deutlich höhere Mengen des Bindemittels eingesetzt werden müssen. Die Verteilung der Bindemittelmengen in der Fasermasse ist bei Glasfaserdämmstoffen nicht so gleichmäßig wie bei Steinwolledämmstoffen.

Ergänzend zu den Bindemitteln wird den Mineralfasern Hydrophobier- und Staubbindemittel zugegeben, die der Imprägnierung der Mineralfasern dienen. Hierbei handelt es sich beispielsweise um hochsiedende Mineralöle, die auf den Mineralfasern Kriecheigenschaften entwickeln oder um Öl-in-Wasser-Emulsionen, die aufgrund der oberflächenaktiven Substanzen eine gleichmäßige Benetzung der Mineralfaseroberflächen bewirken. Hierbei kann beispielsweise Mineralöl in Kühlwasser transportiert werden, so dass auch hier eine schlagartige Verdampfung des Wassers auf den Mineralfaseroberflächen zur Bildung sehr feiner Aerosole führt, die sich dann nach den Bindemitteln auf den Mineralfaseroberflächen niederschlagen.

Es besteht bei der Herstellung von Mineralfaserdämmstoffen das Ziel, jede einzelne Faser mit der nächsten punktweise zu verbinden. Das ist bei dem derzeitigen Stand der Technik und der Begrenzung des Anteils an bindender organischer Substanz in den Dämmstoffen nicht uneingeschränkt möglich. Die Mineralfaserdämmstoffe enthalten hohe Anteile an nicht gebundenen Mineralfasern. Wie bereits eine überschlägige Berechnung zeigt, müßten zur Erreichung des Zieles deutlich größere Bindemittelmengen eingesetzt werden. Eine Annäherung an das gewünschte Ziel besteht nun darin, dass nur ein Teil der Mineralfasern miteinander verbunden ist und andere Mineralfasern nur aufgrund ihrer flockenartigen Agglomerationen mit diesen verknüpft sind. Am ungünstigsten für die Festigkeitsentwicklung verhalten sich jedoch die ungebundenen Mineralfasern, wenn sie in Form von dünnen Trennschichten in der Fasermasse vorhanden sind. Die Ausbildung dieser Trennschichten kann aber mit der angewendeten Aufsammlungstechnik nicht verhindert werden.

Die Aufsammlungstechnik bewirkt grundsätzliche strukturelle Unterschiede zwischen Glasfasern und Steinwollefasern. Die längeren und glatteren Glasfasern werden überwiegend horizontal abgelegt und bilden eine ausgesprochen laminare Struktur. Diese weist beispielsweise in den beiden parallel zu den großen Oberflächen der Fasermasse verlaufenden Ebenen eine deutlich höhere Zugfestigkeit auf, als in der dazu rechtwinklig verlaufenden Ebene. Dementsprechend ist aber auch der Wärmedurchgangswiderstand in dieser Richtung deutlich höher als quer dazu. Bei den von vornherein schräg gelagerten, kleinflockig agglomerierten Steinwollefasern ist die Richtungsabhängigkeit der mechanischen und wärmeschutztechnischen Eigenschaften im direkten Vergleich zu den Glasfasern weniger ausgeprägt.

Bei der Produktion von Steinwollefasern erreichen die einzelnen Zerfaserungsmaschinen Leistungen bis über 5 t/h. Es ist möglich, zwei oder drei Zerfaserungsmaschinen nebeneinander zu arrangieren und die gebildeten Steinwollefasern in einer Sammelkammer aufzusammeln. Die Steinwollefasern werden in dünnsten zusammenhängenden Schichten mit Flächengewichten von ca. 200 bis 300 g/m² aufgesammelt und abtransportiert. Hierbei entsteht ein sogenanntes Primärvlies, welches durch pendelnde Bewegungen zu einem Sekundärvlies mäandrierend übereinander gelegt wird. Die weitaus gebräuchlichste Ausführungsform dieser Pendelungstechnik besteht in Bewegung des Primärvlieses quer zu der nachfolgenden Produktionsrichtung. Einzelne Primärvlieslagen werden deshalb in schräger Lage zu den großen Oberflächen des Sekundärvlieses abgelegt. Bei einem senkrechten Schnitt zeigt es sich, dass eine aus dem Sekundärvlies bestehende Dämmstoffbahn aus ca. 4 bis 8 übereinander liegenden Primärvlieslagen besteht. Die Technik des Aufpendelns von Primärvlieslagen führt im Vergleich zu der sogenannten direkten Aufsammlungstechnik generell zu einer Vergleichmäßigung der Fasermassenverteilung über die Höhe und Breite und damit auch zu einer weitgehend gleichmäßigen Struktur der Dämmstoffbahn. Auf der anderen Seite aber bleiben die Oberflächen der Primärvliese in dem Sekundärvlies wegen der Umorientierung der einzelnen Mineralfasern und einer Abschwächung der Bindekraft erhalten. Zu der Schwächung tragen insbesondere die ungebundenen Mineralfasern bei, deren Anteil auch bei dieser Zerfaserungstechnik relativ hoch ist. Die ungebundenen Mineralfasern werden in flacher Lagerung auf den Oberflächen der Primärvliese abgelagert und finden sich deshalb schichtartig im Sekundärvlies wieder.

Das mit Binde- und Hydrophobiermitteln imprägnierte Sekundärvlies wird im weiteren Verlauf der Herstellung durch auf seine großen Oberflächen ausgeübten Druck auf die gewünschte Dicke und Rohdichte komprimiert. Wenn spezielle Strukturen erforderlich sind, kann das Sekundärvlies sowohl in Produktionslängsrichtung als auch quer dazu gestaucht werden. Während der Umformung muß dass Bindemittel immer noch klebfähig bleiben. Das verformte Sekundärvlies wird unter Aufrechterhaltung der Verformungskräfte in einen Ofen geleitet, in dem Heißluft durch das Sekundärvlies gesaugt wird. Als Folge der intensiven Energieeinwirkung härtet das Phenol-Formaldehyd-Harnstoffharz-Gemisch oberhalb ca. 220°C innerhalb weniger Minuten aus.

Dämmstoffelemente werden gemäß DIN 18165 Teil 1 in den Lieferformen Platten, Filzen oder Matten hergestellt. Platten sind ebene Körper aus gebundenen Mineralfasern. Filze bestehen ebenfalls aus gebundenen Mineralfasern. Sie können wie die Platten mit oder ohne Beschichtung aus beispielsweise Papier, Aluminium-Folie, Kunststoff-Folie, Farbe oder dergleichen ausgebildet sein. Sie werden in der Regel in gerollter Form angeboten. Matten werden mit Trägermaterialien wie Drahtgeflecht, Wellpappe, Vliese durch Vernadelung oder Versteppung verbunden. Matten können ebenfalls aufgerollt werden.

Dämmstoffplatten aus Mineralfasern zeichnen sich in Abhängigkeit von der Struktur der Fasermasse und dem Bindemittelgehalt durch eine gewisse innere Festigkeit bzw. Steifigkeit aus. Gemäß DIN 18165 Teil 1 sind nur geringe Grenzabweichungen von den Abmessungen, insbesondere von der Dicke erlaubt. Derartige Dämmstoffplatten werden beispielsweise zwischen die Ständer von Holzwänden gezwängt oder zwischen die Konstruktionshölzer von Holzbalkendecken oder geneigten Dachkonstruktionen geklemmt.

Dämmstoffplatten mit geringer Rohdichte und an und für sich hoher Kompressibilität werden selten komprimiert verpackt, um auf diese Weise Transport- und Lagerraum zu sparen. Bei relativ hohen Kompressionen wird normalerweise die Struktur einzelner Dämmstoffplatten in dem jeweiligen Stapel irreversibel beschädigt oder es kommt bei längerer Lagerzeit zu Umorientierung der Fasern. In beiden Fällen werden anschließend nicht mehr die Nenndicke und/oder beispielsweise die ursprüngliche Steifigkeit erreicht.

Filze weisen im Vergleich zu den Dämmstoffplatten geringere Bindemittelgehalte auf. Die Steifigkeit ist in allen drei Raumachsen gering. Filze werden während des Aufrollens um bis zu 70 % komprimiert, d.h. ein Dämmfilz beispielsweise mit der Nenndicke von 100 mm wird bis auf 30 mm zusammengedrückt. Auch hier kommt es während der Lagerungszeit zu Relaxationseffekten, so dass die Steifigkeit der Filze abnimmt und auch die Nenndicke nicht immer wieder erreicht wird. Die Filze werden deshalb mit Überdicke hergestellt, damit sie nach dem komprimierenden Aufrollen bzw. dem Entrollen wieder die Nenndicke erreichen. Bei diesen Filzen sind die erlaubten Grenzabweichungen von der Nenndicke deutlich größer als bei Platten, so dass insbesondere positive Dickenabweichungen nicht die Gebrauchsfähigkeit einschränken. Die Filze eignen sich nicht für den selbst-klemmenden Einbau zwischen Konstruktionselementen wie Dachsparren. Die Befestigung erfolgt mit Hilfe von aufgeklebten Trägerfolien, die beispielsweise an der Unterseite der Dachsparren befestigt werden.

Um sowohl die wirtschaftlichen Vorteile eines hoch komprimierten und gerollten Dämmstoffs aus Mineralfasern zu nutzen als auch den wärmeschutztechnisch präzisen und auch schnelleren Einbau einer Platte erreichen zu können, schlägt die DE-C-36 12 857 vor, einen unkaschierten mehrere Meter langen Dämmfilz komprimiert aufzurollen. Um beispielsweise eine geneigte Dachkonstruktion zu dämmen, werden von dem Dämmfilz Platten in Form von Abschnitten abgetrennt und zwischen die Sparren klemmend eingebaut. Die Abschnitte werden so orientiert, dass die im gerollten Dämmfilz außen liegende Zone nach oben gerichtet ist. Um die notwendige Klemmwirkung zu erreichen, muß der Plattenabschnitt eine gewisse Überbreite, aber auch eine ausreichende Steifigkeit aufweisen. Hierzu wird der Filz mit einer Rohdichte von 10 bis 40 kg/m³, insbesondere 10 bis 25 kg/m³ beim Aufrollen im Verhältnis 1 : 2,5 komprimiert. Die Steifigkeit der Abschnitte wird durch einen auf 6 bis 7 Masse-% erhöhten Bindemittelgehalt erreicht. Durch die Angabe des Rohdichtenbereichs, insbesondere der Angabe < 25 kg/m³ und den Bindemittelgehalt von 6 bis 7 Masse % ist für den Fachmann klar, dass sich die Anwendung nur auf ein Dämmstoffelement aus Glasfasern mit ausgeprägt laminarer Struktur und der daraus resultierenden sehr niedrigen Querzugfestigkeit beziehen kann. Bei derartigen Dämmstoffelementen führt ein Aufrollen zu erheblicher Rißbildung sowohl in der äußeren Zugzone als auch im Bereich der Druckzonen.

Rollbare Filze aus Steinwollefasern mit Rohdichten von ca. 23 bis 30 kg/m³ werden mit Bindemittel-Gehalten von ca. 1,1 bis 2,2 Masse-% hergestellt. Trotz dieser niedrigen Rohdichten und geringen Bindemittelanteile müssen die Filze vor dem Aufrollen um bis zu ca. 70 % vorkomprimiert werden. Für den klemmenden Einbau von in Platten aufteilbaren Filzen weisen diese Rohdichten von 30 bis ca. 55 kg/m³ und Bindemittelgehalte von ca. 2 bis 2,5 Masse-% auf.

Aus der EP-A-0 277 500 ist beispielsweise ein Verfahren zur kontinuierlichen Herstellung einer Faserdämmstoffbahn bekannt, die über ihre Höhe in Bereiche unterschiedlicher Eigenschaften unterteilt ist. Bei diesem vorbekannten Verfahren werden Teilbereiche einer Faserdämmstoffbahn abgetrennt und einer Verdichtung zugeführt, bevor die derart verdichtete Teilbahn der ursprünglichen Dämmstoffbahn zugeführt wird. Die verdichtete Teilbahn wird dann mit der ursprünglichen Dämmstoffbahn verbunden. Auf diese Art erhält man beispielsweise eine Faserdämmstoffbahn mit zwei Bereichen unterschiedlicher Dichte. Diese Vorgehensweise läßt sich auch bei solchen Dämmstoffbahnen anwenden, die sandwichartig aufgebaut sind. Es wird diesbezüglich auf die Figur 5 dieser Druckschrift verwiesen.

Ein gattungsgemäßes Verfahren ist aus der EP-A-0 374 112 bekannt, bei dem Mineralfasern unter Zugabe von Bindemitteln auf einer Fördereinrichtung abgelegt und das Bindemittel anschließend ausgehärtet wird. Hieraus bildet sich eine Dämmstoffbahn, die sodann mäandrierend auf einer weiteren Fördereinrichtung abgelegt wird. Über die Breite weist die Dämmstoffbahn einen unterschiedlichen Bindemittelgehalt auf.

Weiterhin beschreibt die WO-A-99/51536 ein Dämmstoffelement, welches aus einem ersten Faserabschnitt, einem zweiten Faserabschnitt und einem Kern zwischen dem ersten und dem zweiten Faserabschnitt besteht. Die beiden Faserabschnitte und der Kern sind sandwichartig übereinander angeordnet, wobei ein zusätzliches Material in den Bestandteilen des Dämmstoffelementes angeordnet ist, welches zusätzliche Material in den einzelnen Bestandteilen in unterschiedlicher Konzentration vorliegt. Hierbei weist der Kern die höchste Konzentration des zusätzlichen Materials auf, wobei es sich beispielsweise um ein Bindemittel handeln kann.

Ausgehend von dem voranstehend beschriebenen Stand der Technik liegt der Erfindung die Aufgabe zugrunde, ein Dämmelement sowie ein Verfahren zu seiner Herstellung zu schaffen, welches in einfacher Weise schonend wickelbar ist, ohne dass die voranstehend beschriebenen Nachteile auftreten, wobei das Dämmelement eine hohe Elastizität aufweist.

Die **Lösung** dieser Aufgabenstellung sieht ein erfindungsgemäßes Verfahren mit den Merkmalen des Anspruchs 1 vor.

Beispielsweise können Mineralfasern in einer mittleren Zone mit ca. 1,5 bis ca. 5,0, vorzugsweise 2,0 bis 2,5 Masse-% duroplastisch aushärtender, in dünnen Filmen zähplastisch verformbarer bzw. zähbrechender Kunstharze, wie beispielsweise Phenol-Formaldehyd-Harnstoffharz-Gemische oder Melaminharze, Polyester oder ähnlichem versetzt werden, während die Mineralfasern in den äußeren Zonen mit einem Bindemittelgehalt von maximal 2 Masse-%, vorzugsweise zwischen 0,8 und 1,5 Masse-% gebunden sind.

Nach einem weiteren Merkmal des erfindungsgemäßen Verfahrens ist vorgesehen, dass in der Dämmstoffbahn ein Bereich erhöhten Bindemittelgehaltes ausgebildet wird, der sich in Längsrichtung der Dämmstoffbahn erstreckt und bezogen auf die Breite der Dämmstoffbahn in der Mitte angeordnet ist und vorzugsweise eine Breite von bis zu 1/3 der Gesamtbreite der Dämmstoffbahn einnimmt.

Es ist ferner vorgesehen, dass der Bereich erhöhten Bindemittelgehaltes als Schicht gleichmäßiger Breite in die Dämmstoffbahn eingebracht wird. Alternativ kann selbstverständlich vorgesehen sein, dass die Breite des Bereiches erhöhten Bindemittelgehaltes zumindest in einer Ebene parallel zu den großen Oberflächen variiert wird.

Die Aufrollbarkeit eines derartigen Dämmstoffelementes kann alternativ auch dadurch verbessert werden, dass bei dem erfindungsgemäßen Verfahren vorgesehen ist, dass der Bereich erhöhten Bindemittelgehaltes als gitternetzartige Schicht in die Dämmstoffbahn eingebracht wird. In allen Fällen kann sich der Bereich erhöhten Bindemittelgehaltes kontinuierlich in Längsrichtung der Dämmstoffbahn erstrecken. Dieser Bereich endet in einigem Abstand vor den jeweiligen Außenflächen. Hierdurch wird eine relativ weiche Randfläche erzeugt, die einen fugendichten Sitz, beispielsweise zwischen zwei benachbarten Dachsparren im Schrägdachbereich oder zu benachbarten Dämmstoffelementen ermöglicht.

Ergänzend zu dem erhöhten Bindemittelgehalt ist nach einem weiteren Merkmal des erfindungsgemäßen Verfahrens vorgesehen, dass der Bereich erhöhten Bindemittelgehaltes derart komprimiert wird, dass die Rohdichte in diesem Bereich gegenüber den weiteren Bereichen erhöht ist. Vorzugsweise wird in diesem Bereich erhöhten Bindemittelgehaltes eine Rohdichte zwischen 28 und 40 kg/m³ und in den weiteren Bereichen eine Rohdichte zwischen 20 und 32 kg/m³ erzeugt. Mit zunehmender Rohdichte der Bereiche ohne erhöhtem Bindemittelgehalt wird selbstverständlich die Differenz der Rohdichten zueinander geringer ausgebildet. Insgesamt ist aber vorgesehen, dass zwischen den Bereichen erhöhten Bindemittelgehaltes und den Bereichen normalen Bindemittelgehaltes ein Unterschied im Bindemittelgehalt besteht.

Da die bei einem aufgewickelten Dämmstoffelement in der neutralen Phase liegende Zone weniger auf Zug und Druck beansprucht wird, als die weiter außen liegenden Zonen und Bereiche des Dämmstoffelementes, ist nach einem weiteren Merkmal der Erfindung vorgesehen, dass als Bindemittel in den Bereichen erhöhten Bindemittelgehaltes anorganische Bindemittel, wie Nanokomposite und/oder insbesondere spröd-brüchige Bindemittel mit kurzen Aushärtezeiten, wie Kieselsol, Wasserglas, Phosphatbinder und/oder Kombinationen bzw. Mischungen daraus mit oder ohne Kunststoffzusätzen eingebracht wird. Vorzugsweise wird in den Bereichen erhöhtem Bindemittelgehaltes bis zu 15 Masse-%, insbesondere zwischen 5 Masse-% und 10 Masse-% anorganisches Bindemittel eingebracht.

In den Zonen außerhalb der Bereiche mit höherem Bindemittelgehalt werden plastisch verformbare Bindemittel, wie PVAC-, Acrylat- und/oder Silikonharz und/oder Mischungen daraus eingebracht. Derartige Bindemittel weisen eine erhebliche Dehnfähigkeit auf und lassen sich weitgehend ohne Rißbildung verformen. Die Verformung soll auch nach dem Entrollen eine Zeit lang erhalten bleiben, so dass beispielsweise eine bogenförmige Formgebung der im Wickel außenliegenden Zone das Herausfallen von Filzabschnitten aus Sparrenfeldern verhindert. Im Laufe der Nutzung wird sich diese Verformung zurückbilden. In diesem Fall ist aber das Aufrechterhalten hoher Zwängungskräfte nicht erforderlich, da die vom Filz abgeschnittenen Platten dann in der Regel von einer raumseitigen Dampfbremse oder Bekleidung im Sparrenfeld gehalten wird.

Nach einer Weiterbildung des erfindungsgemäßen Verfahrens ist vorgesehen, dass die Dämmstoffbahn aus einem Primärvlies mit Bereichen erhöhten Bindemittelgehaltes und Bereichen mit üblichem, gegebenenfalls. leicht erhöhtem Bindemittelgehalt hergestellt wird, die alternierend übereinandergelegt wird. Bei dieser Ausgestaltung des erfindungsgemäßen Verfahrens ist ferner vorgesehen, dass den das Primärvlies bildenden Mineralfasern in regelmäßigen zeitlichen Abständen eine größere Bindemittelmenge zugegeben wird, um ein Primärvlies zu bilden, das alternierend Bereiche mit erhöhtem und üblichem, gegebenenfalls. leicht erhöhtem Bindemittelgehalt aufweist. Das Primärvlies wird anschließend in einzelne Primärvlieslagen aufgependelt, die übereinander gelegt ein Sekundärvlies bilden.

Es werden somit alternierend Primärvlieslagen mit weniger Bindemittel und Primärvlieslagen mit höherem Bindemittelgehalt, und ggfs. auch höherer Rohdichte übereinandergelegt. Beim Aufrollen wird daher die weichere, d.h. mit weniger Bindemittelgehalt und ggfs. geringerer Rohdichte ausgebildete Schicht wesentlich stärker verformt, als die steifere Schicht, die demzufolge erhöhten Bindemittelgehalt und ggfs. auch höhere Rohdichte aufweist. Die verfahrenstechnische Umsetzung dieser Ausführungsvariante erfolgt durch eine regelmäßige Erhöhung der Bindemitteldosierung in die produzierte Fasermasse. Die Frequenz der Wechsel zwischen höherem und geringerem Bindemittelanteil ist abhängig von der Geschwindigkeit des Abtransports der aufgesammelten Primärvlieslage und der Breite der auf der Produktionslinie durch die Pendeleinrichtung abgelegten Primärvlieslagen. Hierbei wird angestrebt, dass die Wechsel in der Bindemittelkonzentration mit der Umlenkung der jeweiligen Primärvlieslage zusammenfällt.

Ergänzend kann vorgesehen sein, dass das Verhältnis der Aufgabemenge an Bindemitteln über zentral angeordnete Düsen und über innere peripher angeordnete Düsen gegenüber äußeren peripher angeordneten Düsen geändert wird. Hierbei werden die Ränder der Primärvlieslage mit einem geringen Anteil Bindemittel imprägniert, als der Bereich zwischen den Rändern.

Es besteht darüber hinaus die Möglichkeit, dass über die Düsen unterschiedliche Bindemittel, vorzugsweise in unterschiedlichen Mengen zugeführt werden. Beispielsweise können über die zentralen Düsen Nanokomposite und über die peripheren Düsen duroplastische und/oder thermoplastische Bindemittel eingebracht werden. Um optimale Ergebnisse zu erhalten, kann hierbei auf die gleichzeitige Zugabe von Hydrophobiermitteln verzichtet werden. Das Einbringen der Bindemittel kann symmetrisch zur Mittelachse der Zerfaserungsmaschine erfolgen oder nur auf einer Seite, um beispielsweise eine Anreicherung bevorzugt in eine Außenzone der Sekundärvlieslage vorzunehmen. Entsprechende Variationsmöglichkeiten ergeben sich bei der Aufschaltung von zwei oder mehr Zerfaserungsmaschinen auf eine Sammelkammer. In vielen Fällen wird diese relativ geringe Differenzierung ausreichen, um die gewünschten Produkteigenschaften zu erreichen.

Eine schärfe Abgrenzung zwischen den Bereichen erhöhten Bindemittelgehaltes und den Bereichen normalen oder leicht erhöhten Bindemittelgehaltes läßt sich bei einem Dämmstoffelement dadurch erzielen, dass das ergänzende Bindemittel zusätzlich auf die Primärvlieslage aufgebracht wird. Hierbei erfolgt der Auftrag des zusätzlichen Bindemittels bevorzugt am Ausgang einer Pendelvorrichtung, in der das Primärvlies in einzelne Primärvlieslagen zu einem Sekundärvlies aufgependelt wird. Auf diese Weise wird eine Beaufschlagung der Transporteinrichtung und eine damit verbundene Verschmutzung dergleichen mit Bindemitteln verhindert. Es wird ein zusätzliches Bindemittel vor der Pendelvorrichtung aufgebracht bzw. zusätzliche Bindemittel im Anschluß auf das Aufpendeln der Primärvlieslagen zum Sekundärvlies aufgesprüht. In jedem Fall soll eine Aufkonzentration des Bindemittels in den Primärvlieslagen in einer bestimmten Breite erreicht werden. Die vorzugsweise aufgesprühten Bindemittel müssen deshalb benetzende Substanzen, wie Alkohole und/oder geeignete Tenside enthalten, damit die Fasermasse kapillar aktiv wird. Die Wirksamkeit dieser Substanzen kann dadurch gesteigert werden, dass die Fasermasse bis zum Aufbringen der Bindemittel nicht mit Hydrophobiermitteln imprägniert wird. Nach dem Ablegen der Primärvlieslagen zu einem Sekundärvlies wird dieses komprimiert und das Bindemittel unter entsprechendem Druck mit Wärme ausgehärtet.

Es ist vorgesehen, dass die Primärvlieslagen teilweise oder insgesamt einer Kompression unterzogen wird, um in den Primärvlieslagen Bereiche erhöhter Rohdichte auszubilden. Das Aufbringen des zusätzlichen Bindemittels kann in Form eines oder mehrerer Streifen in Laufrichtung oder quer zur Laufrichtung erfolgen. Eine Kombination beider Richtungen ist grundsätzlich möglich.

Die voranstehend bereits genannte Kompression des Primärvlieses erfolgt flächig oder streifenweise. Die Breite und die Anzahl der hierzu vorzugsweise verwendeten Andruckrollen kann je nach der Breite des Primärvlieses und dem angestrebten Versteifungseffekt variiert werden. Im Anschluß an das flächige oder streifenweise Komprimieren des Primärvlieses wird das Primärvlies mit zusätzlichem Bindemittel besprüht. Hierbei ist es sinnvoll, die Bindemitteldüsen im Anschluß an die Andruckrollen anzuordnen, um eine Verschmutzung dergleichen durch Bindemittel und damit auch Bindemittelverluste zu vermeiden.

Anstelle der Zugabe von Bindemitteln können auch mit Bindemitteln imprägnierte Textil-, Glas-, Synthese- oder Naturfasern sowie Recyclingfasern auf das Primärvlies aufgestreut werden. Diese Faserzugabe erhöht die Zugfestigkeit des aufrollbaren Dämmstoffelementes generell oder in bestimmten Zonen. Recyclingfasern aus rückgewonnenen Steinwolledämmelementen bewirken auch eine Rohdichteerhöhung und somit eine weitergehende Aussteifung des herzustellenden Dämmstoffelementes. Die Recyclingfasern können in einer oder mehreren Lagen übereinander auf dem Primärvlies angeordnet werden. Werden mehrere Lagen Recyclingfasern aufgebracht, so geschieht dies vorzugsweise in Form relativ dünner Schichten. Insgesamt hat es sich als vorteilhaft erwiesen, die Menge der Recyclingfasern auf maximal 25 Masse-% in Bezug auf die Gesamtmasse des Dämmstoffelementes zu begrenzen.

Die derart vorbereiteten, d.h. mit unterschiedlichen Bindemitteln bzw. Bindemittel-Konzentrationen imprägnierte Mineralfasern oder Primärvlieslagen werden wie an sich bekannt komprimiert und in den gebräuchlichen Härteöfen mittels Heißluft ausgehärtet. Hierbei können unterschiedliche Reaktionszeiten der verschiedenen Bindemittel eine Nachhärtung in dem aufrollbaren Därnmstoffelement bewirken. Die dadurch aufgeprägte Verformung ist für bestimmte Anwendungsfälle erwünscht. Dämmstoffelemente, die während der Imprägnierung mit Bindemitteln nicht hydrophobiert worden sind, können nach der Aushärtung der Bindemittel durch beispielsweise nachträgliche Bedampfung behandelt werden. Für diese nachträgliche Behandlung eignen sich insbesondere aliphatische Mineralöle, aber auch eine Vielzahl von pflanzlichen Ölen, die sich auf den Mineralfaseroberflächen kriechend verteilen.

Bei der Herstellung von Dämmstoffelementen aus Glasfasern über mehrere hintereinander geschaltete Rotore ist vorgesehen, dass die Bindemittelzugabe von Rotor zu Rotor verändert wird. Innerhalb eines Zerfaserungsaggregates kann dann durch Zusatzdüsen eine Veränderung der Bindemittelkonzentration oder die Zugabe eines anderen Bindemittels erreicht werden. Entsprechend ist die Zugabe und Einbindung imprägnierter Fremdfasern möglich.

Die **Lösung** der eingangs dargestellten Aufgabe wird hinsichtlich eines erfindungsgemäßen Dämmstoffelementes durch die Merkmale gemäß Anspruch 24 erzielt.

Ein derart ausgebildetes Dämmstoffelement ist in Bereichen derart flexibel und elastisch ausgebildet, dass das Dämmstoffelement in einfacher Weise komprimiert gewickelt werden kann, wobei das Dämmstoffelement auch nach längerer Lagerungsdauer seine vor der Kompression vorliegende Form im wesentlichen wieder einnimmt, ohne dass weitergehende Beschädigungen in Form von Rißbildungen auftreten. Ferner kann ein derartiges Dämmstoffelement bevorzugt in einzelne Platten unterteilt klemmend zwischen benachbarten Bauteilen, beispielsweise Dachsparren bei ausreichender Steifigkeit und Elastizität eingebaut werden.

Weitere Merkmale und Vorteile des erfindungsgemäßen Dämmelementes ergeben sich insbesondere aus den diesbezüglichen Unteransprüchen.

Zur Duchführung des erfindungsgemäßen Verfahrens ist eine Vorrichtung vorgesehen, bei der Düsen auf einem Kreisbogen angeordnet sind, welcher Kreisbogen die Walzen des Zerfaserungsaggregats umgibt, wobei die Düsen das Bindemittel in einem Bereich in Längsachsenrichtung der Walzen bis zu einer Richtung rechtwinklig zur Längsachsenrichtung der Walzen in Richtung auf die von den Walzen abgegebenen Mineralfasern abgeben.

Diese Vorrichtung ermöglicht daher die Herstellung von Dämmstoffelementen aus Mineralfasern mit unterschiedlichster Charakteristik hinsichtlich des Bindemittelgehaltes. So können mit der Vorrichtung erhöhte Bindemittelgehalte in allen Bereichen der aufzusammelnden Mineralfasern ausgebildet werden.

Eine alternative Ausgestaltung einer Vorrichtung, bei der zusätzlich eine der Fördereinrichtung nachgeschaltete Pendeleinrichtung vorgesehen ist, mit der ein auf der Fördereinrichtung abgelegtes Primärvlies zu einem Sekundärvlies aufpendelbar ist. Bei dieser Vorrichtung ist der Pendeleinrichtung zumindest eine in Richtung auf eine große Oberfläche des Primärvlieses gerichtete Düse für den Auftrag von Bindemitteln auf einen Bereich erhöhtem Bindemittelgehaltes nachgeschaltet. Demzufolge ist bei dieser Vorrichtung vorgesehen, dass die Bereiche erhöhten Bindemittelgehaltes erst bei einer Primärvlieslage ausgebildet werden. Selbstverständlich besteht in beiden voranstehend dargestellten Ausführungsformen einer derartigen Vorrichtung die Möglichkeit, den Bindemittelgehalt in den Bereichen erhöhten Bindemittelgehaltes sowohl ergänzend in der Sammelkammer und/oder ergänzend im Anschluß an die Pendeleinrichtung zu erhöhen.

Aus der nachfolgenden Beschreibung der zugehörigen Zeichnung ergeben sich weitere Merkmale und Vorteile des Erfindungsgegenstandes sowohl hinsichtlich des Dämmstoffelementes als auch des Verfahrens zur Herstellung des Dämmstoffelementes. In der Zeichnung zeigen:
- Figur 1: eine Vorrichtung zur Herstellung von Dämmstoffelementen in einer schematisch dargestellten perspektivischen Ansicht;
- Figur 2: eine Zerfaserungsmaschine als Bestandteil der Vorrichtung gemäß Figur 1 in einer Seitenansicht;
- Figur 3: eine Pendelvorrichtung als Bestandteil der Vorrichtung gemäß Figur 1 in Seitenansicht;
- Figur 4: eine erste Ausführungsform eines Dämmstoffelementes in Draufsicht;
- Figur 5: das Dämmstoffelement gemäß Figur 4 in Seitenansicht (nicht erfindungsgemäß) und
- Figur 6: eine zweite Ausführungsform eines Dämmstoffelementes in Draufsicht.

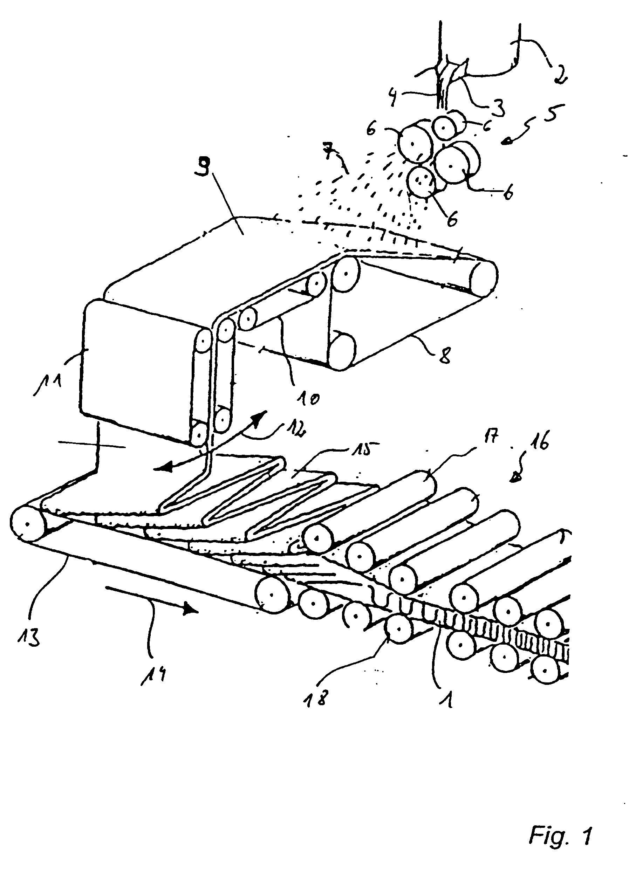

Eine in der Figur 1 dargestellte Vorrichtung zur Herstellung eines Dämmstoffelementes 1 beispielsweise in Form eines wickelbaren Mineralfaserfilzes weist einen Schmelzofen 2 auf, in dem silikatisches Ausgangsmaterial, beispielsweise Gläser oder natürliche bzw. künstliche Steine aufgeschmolzen werden. Der Schmelzofen 2 weist an seinem unteren Ende einen Auslaß 3 auf, aus dem eine Schmelze 4 in Richtung auf einen Kaskadenzerfaserer 5 fließt. Der Kaskadenzerfaserer 5 besteht aus vier rotatorisch angetriebenen Walzen 6, die derart unterhalb des Auslasses 3 angeordnet sind, dass die Schmelze 4 auf die Umfangsfläche der ersten Walze 6 auftrifft, von wo aus die Schmelze 4 in einem ersten Schritt zum Teil zerfasert wird und nicht zerfaserte Bestandteile der Schmelze 4 auf eine zweite darunterliegende Walze 6 gelangt. Von dieser zweiten Walze 6, deren Drehrichtung entgegen der Drehrichtung der ersten Walze 6 ausgerichtet ist, gelangt die weitergehend zerfaserte Schmelze 4 auf die Umfangsfläche der weiter unterhalb angeordneten dritten Walze 6, deren Drehrichtung wiederum mit der Drehrichtung der ersten Walze 6 übereinstimmt.

Schließlich gelangt die weitergehend zerfaserte Schmelze 4 von der dritten Walze 6 auf die unterste vierte Walze 6, deren Drehrichtung wiederum mit der Drehrichtung der zweiten Walze 6 übereinstimmt. Die Walzen 6 haben unterschiedliche Durchmesser.

Die Schmelze 4 wird über die Walzen 6 zerfasert, so dass sich Fasern 7 mit Durchmessern und/oder Längen im Mikrometerbereich ausbilden.

Die Fasern 7 werden in einer nicht näher dargestellten Sammelkammer mit Bindemittel benetzt, um sie miteinander zu verbinden. Die Sammelkammer umfaßt unter anderem den Kaskadenzerfaserer 5. Die Verbindung der Mineralfasern 7 soll auf einem Förderband erfolgen, auf dem ein Primärvlies 9 aus den mit Bindemitteln versetzten Fasern 7 gebildet wird.

Das Primärvlies 9 wird anschließend über ein weiteres Förderband 10 einer Pendelstation 11 zugeführt.

Die Pendelstation 11 besteht aus zwei Förderbändern, die parallel zueinander ausgerichtet und im Abstand zueinander angeordnet sind. Der Abstand zwischen den Förderbändern der Pendelstation 11 ist variabel einstellbar. Die beiden Förderbänder der Pendelstation 11 werden entsprechend einem Pfeil 12 pendelnd hin- und herbewegt, um das Primärvlies 9 auf einem weiteren Förderband 13 in Primärvlieslagen abzulegen. Das Förderband 13 fördert hierbei in einer Richtung gemäß Pfeil 14, die rechtwinklig zur Pendelbewegung gemäß Pfeil 12 ausgerichtet ist.

Die auf dem Förderband 13 abgelegten Primärvlieslagen bilden ein Sekundärvlies 15, welches einer Kompressionseinrichtung 16 zugeführt wird. Die Kompressionseinrichtung 16 besteht aus oberhalb des Sekundärvlieses 15 angeordneten Druck- und Stauchwalzen 17 und aus unterhalb des Sekundärvlieses 15 angeordneten Transport- und Stauchwalzen 18. Der Abstand zwischen Druck- und Stauchwalzen 17 und den Transport- und Stauchwalzen 18 ist variabel einstellbar, um über die Kompression auf das Sekundärvlies 15 die gewünschte Rohdichte des Dämmstoffelementes 1 einzustellen. Gegebenenfalls wird das Sekundärvlies 15 zwischen den Walzen 17 und 18 auch in Transportrichtung und quer dazu gestaucht.

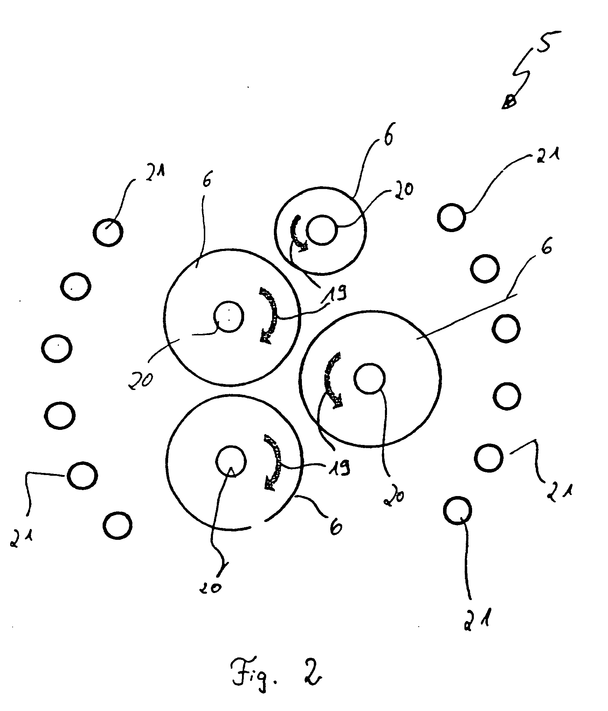

In Figur 2 ist der Kaskadenzerfaserer 5 gemäß Figur 1 detailliert dargestellt. Es sind die Walzen 6 zu erkennen. Mit Pfeilen 19 ist die Drehrichtung der Walzen 6 um ihre jeweils zentrale Achse 20 angedeutet.

Die Achsen 20 sind hohl ausgebildet und weisen Düsen auf, die der Zugabe von Bindemitteln auf die aus der Schmelze 4 gebildeten Mineralfasern 7 dienen.

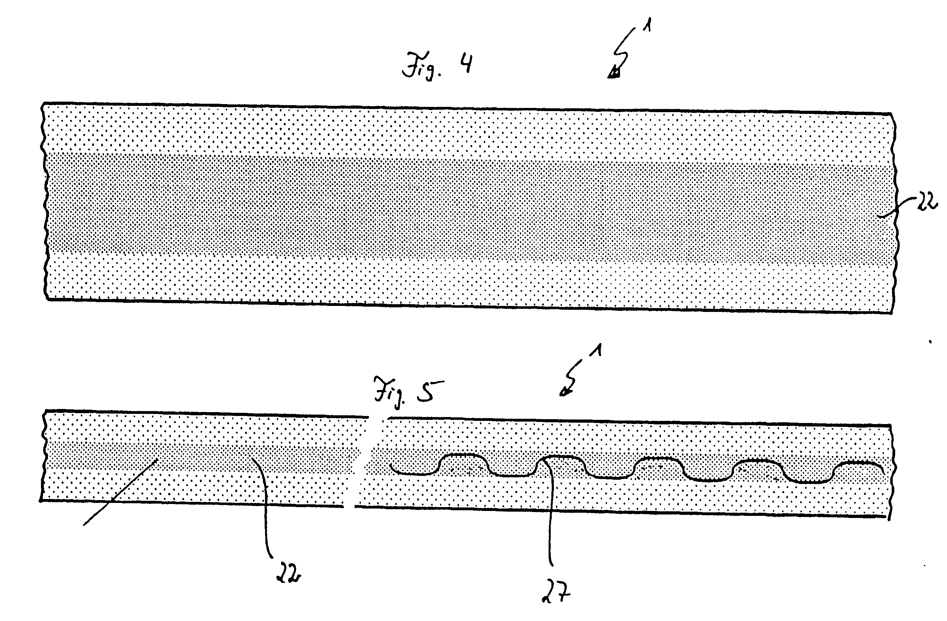

Kreisbogenförmig um die Walzen 6 sind in dem Kaskadenzerfaserer 5 periphere Düsen 21 angeordnet, über die ebenfalls Bindemittel auf die Mineralfasern 7 aufgebracht werden kann. Hierbei können unterschiedliche Bindemittel über die in den Achsen 20 angeordneten Düsen und die Düsen 21 aufgebracht werden. Darüber hinaus können sowohl die Achsen 20 als auch die Düsen 21 gemeinsam oder alternativ Bindemittel auf die Mineralfasern 7 aufbringen, um beispielsweise Mineralfasern 7 mit einer großen Menge Bindemittel zu benetzen, die dann Bereiche 22 erhöhten Bindemittelgehaltes im Dämmstoffelement 1 ausbilden. Entsprechende Bereiche 22 sind in den Figuren 4 bis 6 dargestellt, die nachfolgend noch beschrieben werden.

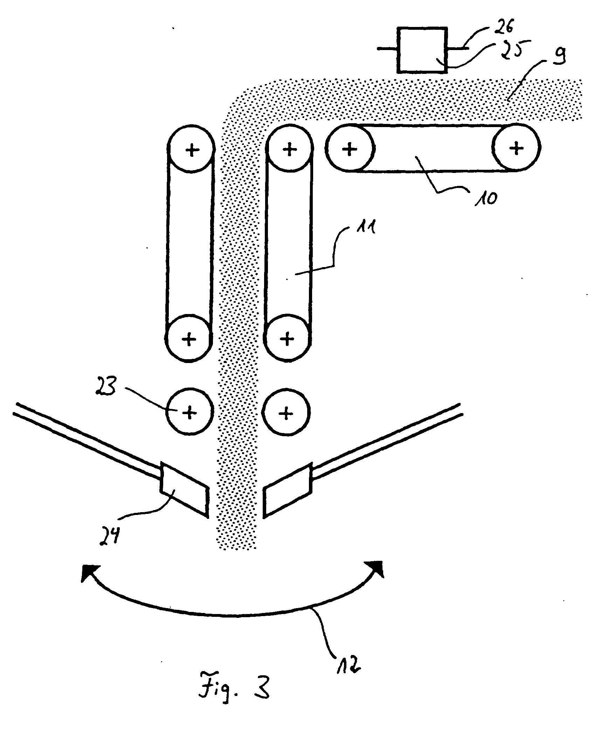

Figur 3 zeigt die Pendelstation 11 in detaillierter Seitenansicht. Es ist zu erkennen, dass unterhalb der Pendelstation 11 ergänzende Andruckwalzen 23 angeordnet sind, die das Primärvlies 9 ausgangsseitig der Pendelstation 11 auf eine vorbestimmte Rohdichte komprimieren. Unterhalb der Andruckwalzen 23 sind ergänzende Düsen 24 für Bindemittel vorgesehen. Die Düsen 24 erstrekken sich im wesentlichen über die gesamte Breite des Primärvlieses 9 und können in einzelne Düsenabschnitte unterteilt sein, so dass die Aufgabe von Bindemitteln auf das Primärvlies 9 lokal steuerbar ist. Insbesondere kann über die Düsen 24 Bindemittel bereichsweise, beispielsweise auf den Mittelbereich des Primärvlieses 9 aufgebracht werden, um dort einen Bereich 22 mit erhöhtem Bindemittelgehalt zu erzeugen.

Die Düsen 24 sind ebenfalls wie die Andruckwalzen 23 mit den Förderbändern der Pendelstation 11 gekoppelt, so dass sich die Förderbänder der Pendelstation 11 zusammen mit den Andruckwalzen 23 und den Düsen 24 entsprechend dem Pfeil 12 pendelnd bewegen.

Ergänzend ist dem Förderband 10 gegenüberliegend zumindest eine Walze 25 angeordnet, die um eine Achse 26 drehbar gelagert ist. Die Achse 26 ist hierbei parallel zur Förderrichtung des Primärvlieses 9 ausgerichtet. Gegebenenfalls kann die Achse 26 rechtwinklig zur Förderrichtung des Primärvlieses 9 verschiebbar angeordnet sein.

Die Walze 25 dient der Rohdichtenerhöhung in einem Bereich des Primärvlieses 9. So kann mit der Walze 25 beispielsweise der Mittelbereich des Primärvlieses 9 verdichtet werden, auf dem über die Düsen 24 anschließend zusätzliches Bindemittel aufgetragen wird.

In den Figuren 4 bis 6 sind - wie bereits ausgeführt - verschiedene Ausführungsformen von Dämmstoffelementen 1 dargestellt. Die Figuren 4 und 5 zeigen hierbei eine erste Ausführungsform, bei dem in Draufsicht ein mittlerer Bereich 22 erhöhten Bindemittelgehalt aufweist. Gemäß Figur 5 kann dieser Bereich 22 erhöhtem Bindemittelgehaltes auch in Seitenansicht im mittleren Bereich der Höhe des Dämmstoffelementes 1 angeordnet sein und ungefähr einen Bereich von einem Drittel der Gesamthöhe des Dämmstoffelementes 1 umfassen.

In der Figur 5 ist mit einer Linie 27 die mäandrierende Lage des Primärvlieses 9 im Sekundärvlies 15 dargestellt, das über die Pendelstation 11 in Verbindung mit dem in Pendelrichtung rechtwinklig dazu angeordneten Förderband 13 erzeugt wird.

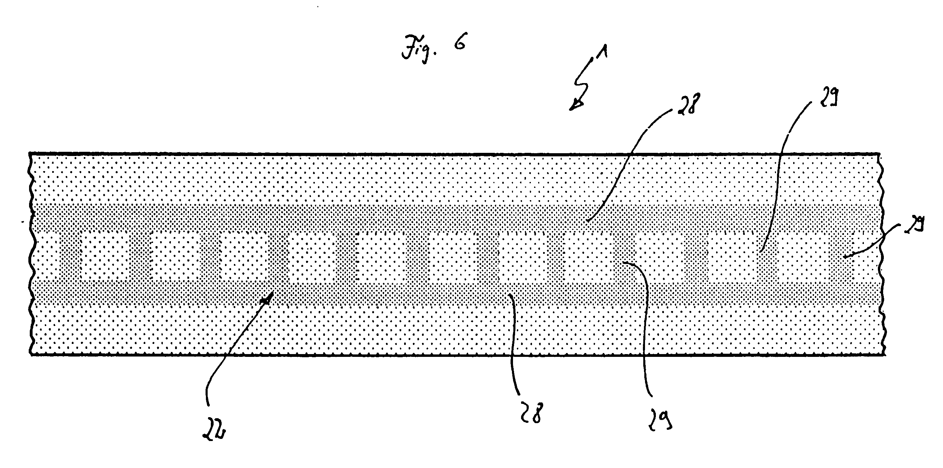

Eine zweite Ausführungsform des erfindungsgemäß ausgebildeten Dämmstoffelementes 1 ist in Figur 6 dargestellt. Diese Ausführungsform des Dämmstoffelementes 1 unterscheidet sich von der Ausführungsform des Dämmstoffelementes 1 gemäß Figur 4 dadurch, dass der Bereich 22 erhöhten Bindemittelgehaltes eine gitterartige Struktur aufweist. Hierzu hat der Bereich 22 erhöhten Bindemittelgehaltes zwei parallel verlaufende und im Abstand zueinander angeordnete Stege 28, die sich in Längsrichtung des Dämmstoffelementes 1 erstrecken. Die Stege 28 weisen im wesentlichen eine übereinstimmende Breite auf, die über die Länge des Dämmstoffelementes 1 gleichbleibend ausgebildet ist.

Zwischen den Stegen 28 erstrecken sich rechtwinklig hierzu in gleichmäßigen Abständen Schenkel 29, die ebenfalls erhöhten Bindemittelgehalt aufweisen. Zwischen den Schenkeln 29 und den Stegen 28 sind somit eine quadratische Fläche aufweisende Bereiche mit üblichem oder leicht erhöhtem Bindemittelgehalt angeordnet. Der Bindemittelgehalt in diesen Bereichen entspricht dem Bindemittelgehalt in den Bereichen beidseitig des Bereichs 22 mit erhöhtem Bindemittelgehalt.

## Patentansprüche

1. Verfahren zur Herstellung eines Dämmstoffelementes, insbesondere einer roll- und wickelbaren Dämmstoffbahn aus Mineralfasern, vorzugsweise aus Steinwolle, bei dem Mineralfasern unter Zugabe von Bindemitteln auf einer Fördereinrichtung abgelegt und das Bindemittel anschließend ausgehärtet wird, wobei
der Bindemittelgehalt der Mineralfasern nach dem Ablegen auf der Fördereinrichtung derart variiert wird, dass über die Breite des Dämmstoffelementes Bereiche ausgebildet werden, die einen erhöhten Bindemittelgehalt aufweisen,
**dadurch gekennzeichnet,**
dass zur Ausbildung des Bereichs erhöhten Bindemittelgehaltes das Bindemittel in diesem Bereich direkt auf ein Primärvlies aufgebracht, vorzugsweise aufgesprüht wird,
dass das Primärvlies im Bereich der Bindemittelaufgabe flächig oder streifenförmig komprimiert wird und
dass auf die komprimierten Bereiche des Primärvlieses zusätzliches Bindemittel aufgebracht wird,
dass der sich in Längsrichtung des Primärvlieses erstreckende und bezogen auf die Breite des Primärvlieses in der Mitte angeordnete Bereich erhöhten Bindemittelgehaltes derart komprimiert wird, dass die Rohdichte in diesem Bereich gegenüber den weiteren Bereichen erhöht ist, wobei das Dämmstoffelement über seine Breite in Bereiche unterschiedlicher Eigenschaften unterteilt ist.

2. Verfahren nach Anspruch 1,
**dadurch gekennzeichnet,**
dass den Mineralfasern ein erhöhter Bindemittelgehalt zwischen 1,5 bis 5,0 Masse-%, insbesondere 2,0 bis 2,5 Masse-% zugegeben wird.

3. Verfahren nach Anspruch 1,
**dadurch gekennzeichnet,**
dass als Bindemittel in den Bereichen erhöhten Bindemittelgehaltes ein duroplastisch aushärtendes, in dünnen Filmen zähplastisch verformbares bzw. zähbrechendes Kunstharz, wie beispielsweise Phenol-Formaldehyd-Harnstoffharz-Gemisch, Melaminharz und/oder Polyester eingebracht wird.

4. Verfahren nach Anspruch 1,
**dadurch gekennzeichnet,**
dass die Mineralfasern außerhalb der Bereiche erhöhten Bindemittelgehaltes mit einem Bindemittelgehalt bis maximal 2 Masse-%, insbesondere zwischen 0,8 und 1,5 Masse-% Bindemittel versehen werden.

5. Verfahren nach Anspruch 1,
**dadurch gekennzeichnet,**
dass in dem Bereich erhöhten Bindemittelgehaltes eine Rohdichte zwischen 28 und 40 kg/cm³ und in den weiteren, insbesondere benachbarten Bereichen eine Rohdichte zwischen 20 und 32 kg/m³ erzeugt wird.

6. Verfahren nach Anspruch 1,
**dadurch gekennzeichnet,**
dass als Bindemittel in den Bereichen erhöhten Bindemittelgehaltes anorganische Bindemittel, wie Nanokomposite und/oder insbesondere spröd-brüchige Bindemittel mit kurzen Aushärtezeiten, wie Kieselöl, Wasserglas, Phosphatbinder und/oder Kombination bzw. Mischungen daraus mit oder ohne Kunststoffzusätzen eingebracht wird.

7. Verfahren nach Anspruch 6,
**dadurch gekennzeichnet,**
dass in den Bereichen erhöhten Bindemittelgehaltes bis zu 15 Masse-%, insbesondere zwischen 5 und 10 Masse-% anorganisches Bindemittel eingebracht wird.

8. Verfahren nach Anspruch 7,
**dadurch gekennzeichnet,**
dass mit Zugabe einer höheren Bindemittelmenge im Bereich erhöhten Bindemittelgehaltes die Dicke der Schicht mit erhöhtem Bindemittelgehalt verringert wird.

9. Verfahren nach Anspruch 1,
**dadurch gekennzeichnet,**
dass in den Zonen außerhalb der Bereiche mit höherem Bindemittelgehalt plastisch verformbare Bindemittel, wie PVAC-, Acrylat- und/oder Silikonharz und/oder Mischungen daraus eingebracht werden.

10. Verfahren nach Anspruch 1,
**dadurch gekennzeichnet,**
dass die unterschiedlichen Bindemittelgehalte über zentral, innere periphere und/oder äußere periphere Düsen im Bereich eines Zerfaserungsgerätes gesteuert werden.

11. Verfahren nach Anspruch 10,
**dadurch gekennzeichnet,**
dass über die Düsen unterschiedliche Bindemittel, vorzugsweise in unterschiedlichen Mengen zugeführt werden.

12. Verfahren nach Anspruch 11,
**dadurch gekennzeichnet,**
dass über die zentrale Düse Nanokomposite und über die peripheren Düsen duroplastische und/oder thermoplastische Bindemittel eingebracht werden.

13. Verfahren nach Anspruch 1,
**dadurch gekennzeichnet,**
dass das Bindemittel im Anschluß an eine Pendelstation auf das Primärvlies aufgebracht wird.

14. Verfahren nach Anspruch 1,
**dadurch gekennzeichnet,**
dass dem aufzubringenden Bindemittel benetzende Substanzen, wie Alkohole und/oder Tenside beigefügt werden.

15. Verfahren nach Anspruch 1 bis 14,
**dadurch gekennzeichnet,**
dass das Bindemittel unter Druck ausgehärtet wird.

16. Verfahren nach Anspruch 1 bis 15,
**dadurch gekennzeichnet,**
dass das Primärvlies vor und/oder nach dem Aufbringen des Bindemittels und/oder nach dem Ablegen als Sekundärvlies komprimiert wird.

17. Verfahren nach Anspruch 1,
**dadurch gekennzeichnet,**
dass das Bindemittel auf zumindest eine Oberfläche des Primärvlieses in Transportrichtung streifenförmig aufgebracht wird.

18. Verfahren nach Anspruch 1,
**dadurch gekennzeichnet,**
dass das Bindemittel auf zumindest eine Oberfläche des Primärvlieses quer zur Transportrichtung streifenförmig aufgebracht wird.

19. Verfahren nach Anspruch 1,
**dadurch gekennzeichnet,**
dass der Bindemittelgehalt durch die Aufgabe von mit Bindemitteln imprägnierten Fasern, insbesondere Textil-, Glas-, Synthese- und/oder Naturfasern sowie Recyclingfasern erhöht wird, die vorzugsweise auf ein Primärvlies bereichsweise aufgestreut werden.

20. Verfahren nach Anspruch 19,
**dadurch gekennzeichnet,**
dass die mit Bindemitteln imprägnierten Fasern in Schichten während des Aufsammelns der Mineralfasern auf der Fördereinrichtung aufgebracht werden.

21. Verfahren nach Anspruch 19,
**dadurch gekennzeichnet,**
dass bis zu 25 Masse-% mit Bindemitteln imprägnierte Fasern bezogen auf die Gesamtmasse der Dämmstoffbahn eingebracht werden.

22. Verfahren nach Anspruch 1,
**dadurch gekennzeichnet,**
dass während der Imprägnierung mit Bindemitteln nicht hydrophobierte Mineralfasern vorzugsweise nach der Aushärtung der Bindemittel bedampft werden.

23. Verfahren nach Anspruch 22,
**dadurch gekennzeichnet,**
dass die Bedampfung mit aliphatischen Mineralölen, pflanzlichen Ölen und/oder anderen sich auf den Mineralfaseroberflächen kriechend verteilenden Hydrophobierungs-Mitteln durchgeführt wird.

24. Dämmstoffelement aus mit Bindemitteln gebundenen Mineralfasern, insbesondere aus Steinwollefasern, vorzugsweise in Form einer wickelbaren, in einzelne Platten zu separierende Dämmstoffbahn aus Mineralfasern, hergestellt nach dem Verfahren gemäß den Ansprüchen 1 bis 23 bestehend aus einem insbesondere geradflächig begrenztem Körper mit zwei parallel zueinander und im Abstand angeordneten großen Oberflächen sowie insbesondere rechtwinklig zu den großen Oberflächen verlaufenden Seitenflächen und Stirnflächen, die ebenfalls rechtwinklig und im Abstand zueinander angeordnet und parallel verlaufend ausgerichtet sind, wobei über die Breite des Dämmstoffelementes zumindest zwei Bereiche mit Mineralfasern angeordnet sind, von welchen ein Bereich (22) mit einem erhöhten Bindemittelgehalt ausgebildet ist,
**dadurch gekennzeichnet,**
dass der Bereich erhöhten Bindemittelgehaltes derart komprimiert ist, dass die Rohdichte in diesem Bereich (22) gegenüber weiteren Bereichen erhöht ist, wobei das Dämmstoffelement über seine Breite in Bereiche unterschiedlicher Eigenschaften unterteilt ist und dass sich der Bereich (22) erhöhten Bindemittelgehaltes in Längsrichtung erstreckt und in der Mitte der Mineralfaserbahn (1), bezogen auf die Breite der Mineralfaserbahn (1) angeordnet ist, wobei das Bindemittel im Bereich (22) als duroplastisch aushärtendes, in dünnen Filmen zähplastisch verformbares bzw. zähbrechendes Kunstharz, wie beispielsweise Phenol-Formaldehyd-Harnstoffharz-Gemisch, Melaminharz und/oder Polyester ausgebildet ist.

25. Dämmstoffelement nach Anspruch 24,
**dadurch gekennzeichnet,**
dass die Rohdichte im Bereich (22) zwischen 28 und 40 kg/m³ und in den übrigen Bereichen zwischen 20 und 32 kg/m³ liegt, wobei die Rohdichte im Bereich (22) höher als in den übrigen Bereichen ist.

26. Dämmstoffelement nach Anspruch 24,
**dadurch gekennzeichnet,**
dass der Bereich (22) erhöhten Bindemittelgehaltes eine Breite von ungefähr 50 bis 75 %, insbesondere von 66 % der Gesamtbreite der Mineralfaserbahn (1) aufweist.

27. Dämmstoffelement nach Anspruch 24,
**dadurch gekennzeichnet,**
dass der Bereich (22) erhöhten Bindemittelgehaltes streifenförmig ausgebildet ist.

28. Dämmstoffelement nach Anspruch 24,
**dadurch gekennzeichnet,**
dass der Bereich (22) erhöhten Bindemittelgehaltes gitternetzartig ausgebildet ist.

29. Dämmstoffelement nach Anspruch 24,
**dadurch gekennzeichnet,**
dass der Bereich (22) erhöhten Bindemittelgehaltes eine über die gesamte Länge der Mineralfaserbahn (1) im wesentlichen konstante Breite aufweist.

30. Dämmstoffelement nach Anspruch 24,
**dadurch gekennzeichnet,**
dass der Bereich (22) erhöhten Bindemittelgehaltes komprimiert ist.

31. Dämmstoffelement nach Anspruch 24,
**dadurch gekennzeichnet,**
dass das Bindemittel im Bereich (22) als anorganisches Bindemittel, beispielsweise als Nanokomposite und/oder als insbesondere spröd-brüchiges Bindemittel mit kurzen Aushärtezeiten, wie beispielsweise Kieselsol, Wasserglas, Phosphatbinder und/oder Kombinationen bzw. Mischungen daraus mit oder ohne Kunststoffzusätzen ausgebildet ist.

32. Dämmstoffelement nach Anspruch 24,
**dadurch gekennzeichnet,**
dass das Bindemittel außerhalb des Bereichs (22) erhöhten Bindemittelgehaltes als plastisch verformbares Bindemittel, wie PVAC-, Acrylat- und/oder Silikonharz und/oder Mischungen daraus ausgebildet ist.

33. Dämmstoffelement nach Anspruch 24,
**dadurch gekennzeichnet,**
dass der Bereich (22) zwischen den großen Oberflächen mit einem erhöhten Bindemittelgehalt von bis zu 15.0 Masse-%, vorzugsweise zwischen 2 und 10 Masse-%, insbesondere zwischen 2,0 und 2,5 Masse-% ausgebildet ist.

## Claims

1. Process for producing an insulating element, in particular an insulating web made of mineral fibers that can be rolled and wrapped, preferably from rock wool, in which process mineral fibers are deposited on a conveyor device while adding binders which are subsequently allowed to cure,
wherein after depositing the fibers on the conveyor device, the binder content of the mineral fibers is varied in such a way that areas are formed over the width of the insulating element which exhibit an increased binder content,
**characterized in**
that for forming the area which exhibits the increased binder content, the binder in this area is directly applied to a primary fibrous web, preferably by spraying,
that said primary fibrous web in the binder feeding area is compressed in a planar or strip-like manner and
that additional binder is applied to the compressed areas of the fibrous primary web and
that the area with the increased binder content which extends in the longitudinal direction of the primary web and is arranged centrally in relation to the width of the primary web is compressed in such a manner that the bulk density in this area is increased compared to the further areas, said insulating element over the width thereof being subdivided into areas having different characteristics.

2. Process according to claim 1,
**characterized in**
that an increased binder content between 1.5 to 5.0 percent by weight, in particular 2.0 to 2.5 percent by weight, is added to the mineral fibers.

3. Process according to claim 1,
**characterized in**
that a duroplastically curing artificial resin which is deformable or rupturing in thin films in a ductile fashion, such as for instance a phenol-formaldehyde-urea resin mixture, melamine resin and/or polyester is introduced as a binder into the areas having an increased binder content.

4. Process according to claim 1,
**characterized in**
that the mineral fibers outside the areas which have an increased binder content are provided with a binder content of up to max 2 percent by weight, in particular between 0.8 and 1.5 percent by weight of binder.

5. Process according to claim 1,
**characterized in**
that in the area having the increased binder content a bulk density between 28 and 40 kg/cm³ and in the further areas, especially in the adjacent areas, a bulk density between 20 and 32 kg/m³ is produced.

6. Process according to claim 1,
**characterized in**
that inorganic binders such as for instance nano-composites and/or especially crumbly brittle binders having short curing times such as silica oil, water glass, phosphate binders and/or combinations or mixtures thereof, with or without synthetic additives, are introduced as a binder into the areas having an increased binder content.

7. Process according to claim 6,
**characterized in**
that up to 15 percent by weight, in particular between 5 and 10 percent by weight of inorganic binder are introduced into the areas having an increased binder content.

8. Process according to claim 7,
**characterized in**
that the thickness of the layer having an increased binder content is reduced with the addition of a higher amount of binder in the area having the increased binder content.

9. Process according to claim 1,
**characterized in**
that plastically deformable binders such as PVAC, acrylate and/or silicone resin and/or mixtures thereof are introduced into the zones outside the areas having the increased binder content.

10. Process according to claim 1,
**characterized in**
that the different binder contents are controlled via central inner peripheral and/or outer peripheral nozzles in the region of a defibering device.

11. Process according to claim 10,
**characterized in**
that through said nozzles different binders are supplied, preferably in different amounts.

12. Process according to claim 11,
**characterized in**
that through the central nozzle nano-composites and through the peripheral nozzles duroplastic and/or thermoplastic binders are fed.

13. Process according to claim 1,
**characterized in**
that the binder is applied to the primary fibrous web subsequently to an oscillating station.

14. Process according to claim 1,
**characterized in**
that wetting substances such as alcohols and/or tensides are added to the binder which is to be applied.

15. Process according to the claims 1 to 14,
**characterized in**
that the binder is cured under pressure.

16. Process according to the claims 1 to 15,
**characterized in**
that the primary fibrous web is compressed before and/or after applying the binder and/or after being deposited as a secondary fibrous web.

17. Process according to claim 1,
**characterized in**
that the binder is applied in a strip-like fashion to at least one surface of the primary fibrous web in the transport direction.

18. Process according to claim 1,
**characterized in**
that the binder is applied in a strip-like fashion to at least one surface of the primary fibrous web transversely to the transport direction.

19. Process according to claim 1,
**characterized in**
that the binder content is increased by supplying binder-impregnated fibers, particularly textile, glass, synthetic and/or natural fibers as well as recycling fibers which are preferably applied by scattering to certain areas of a primary fibrous web.

20. Process according to claim 19,
**characterized in**
that the binder-impregnated fibers are applied in layers to the conveyor device during the collection of the mineral fibers.

21. Process according to claim 19,
**characterized in**
that referred to the total mass of the insulating web, up to 25 percent by weight of binder-impregnated fibers are introduced.

22. Process according to claim 1,
**characterized in**
that during the impregnation with binders, non-hydrophobic mineral fibers are vaporized preferably after the curing of the binders.

23. Process according to claim 22,
**characterized in**
that the vaporization is performed with aliphatic mineral oils, vegetable oils and/or hydrophobing agents which are distributed in a creeping fashion on the mineral fiber surfaces.

24. Insulating element from mineral fibers which are bound with binders, in particular from rock wool, preferably in the form of an insulating web from mineral fibers that can be rolled and separated to form individual boards, said insulating element being produced in a process according to one of the claims 1 to 23 and consisting of a body which is delimited especially by straight surfaces and which includes two mutually parallel major surfaces which are arranged at a distance as well as lateral faces and front faces which especially extend at right angles to the major surfaces and which are also arranged at right angles and with a distance to each other and are oriented to run parallel, wherein over the width of the insulating element at least two areas with mineral fibers are arranged, one area (22) thereof being formed with an increased binder content,
**characterized in**
that the area with the increased binder content is compressed in such a way that the bulk density in this area (22) is increased compared to further areas, the insulating element being subdivided over its width into areas with different characteristics, and that the area (22) having the increased binder content extends in the longitudinal direction and is arranged centrally of the web of mineral fibers (1) in relation to the width of the web of mineral fibers (1), the binder in said area (22) being formed as a duroplastically curing artificial resin which is deformable or rupturing in thin films in a ductile fashion, such as for instance a phenolformaldehyde-urea resin mixture, melamine resin and/or polyester.

25. Insulating element according to claim 24,
**characterized in**
that the bulk density in the area (22) is between 28 and 40 kg/cm³ and in the remaining areas between 20 and 32 kg/m³, wherein the bulk density in the area (22) is higher than in the remaining areas.

26. Insulating element according to claim 24,
**characterized in**
that the area (22) having the increased binder content has a height of about 50 to 75%, in particular 66% of the total width of the mineral fiber web (1).

27. Insulating element according to claim 24,
**characterized in**
that the area (22) having the increased binder content is formed in a strip-like fashion.

28. Insulating element according to claim 24,
**characterized in**
that the area (22) having the increased binder content is form in a gridlike fashion.

29. Insulating element according to claim 24,
**characterized in**
that the area (22) having the increased binder content has a substantially constant width over the entire length of the mineral fiber web (1).

30. Insulating element according to claim 24,
**characterized in**
that the area (22) having the increased binder content is compressed.

31. Insulating element according to claim 24,
**characterized in**
that the binder in the area (22) is formed as an inorganic binder, e.g. as a nano-composite and/or especially as a crumbly brittle binder having short curing times such as for instance silica sol, water glass, phosphate binder and/or combinations or mixtures thereof, with or without synthetic additives.

32. Insulating element according to claim 24,
**characterized in**
that the binder outside the area (22) having the increased binder content is formed as a plastically deformable binder such as PVAC, acrylate and/or silicone resin and/or mixtures thereof.

33. Insulating element according to claim 24,
**characterized in**
that the area (22) between the major surfaces is formed with an increased binder content of up to 15.0 % by weight, preferably between 2 and 10% by weight, particularly between 2.0 and 2.5% by weight.

## Revendications

1. Procédé de fabrication d'un élément en matériau isolant, en particulier d'un lé de matériau isolant qui peut être roulé et enroulé en fibres minérales, de préférence en laine minérale, pour lequel des fibres minérales sont déposées sur un dispositif de transport en ajoutant des liants et le fiant est ensuite durci, le taux de liant des fibres minérales étant varié après le dépôt sur le dispositif de transport de telle manière que des zones qui présentent un taux accru de liant sont configurées sur la largeur de l'élément en matériau isolant,
**caractérisé en ce**
que, pour configurer la zone de taux accru de liant, le liant est appliqué dans cette zone directement sur un intissé primaire, en particulier est pulvérisé sur cette zone,
que l'intissé primaire est comprimé en surface ou en forme de bandes dans la zone de l'apport de liant,
que du liant supplémentaire est appliqué sur les zones comprimées de l'intissé primaire et
que la zone de taux accru de liant qui s'étend dans le sens longitudinal de l'intissé primaire et qui est placée au milieu par rapport à la largeur de l'intissé primaire est comprimée de telle manière que la masse volumique apparente dans cette zone est accrue par rapport aux autres zones, l'élément en matériau isolant étant divisé sur sa largeur en zones de propriétés différentes.

2. Procédé selon la revendication 1,
**caractérisé en ce**
qu'un taux accru de liant entre 1,5 et 5,0% en masse, en particulier 2,0 à 2,5% en masse, est ajouté aux fibres minérales.

3. Procédé selon la revendication 1,
**caractérisé en ce**
qu'une résine synthétique duroplastique, déformable viscoplastique en minces pellicules ou à cassure ductile, comme par exemple un mélange de résine urée-phénol-formaldéhyde, de la résine de mélamine et/ou du polyester, est appliquée comme liant dans les zones de taux accru de liant.

4. Procédé selon la revendication 1,
**caractérisé en ce**
que les fibres minérales en dehors des zones de taux accru de liant sont pourvues d'un taux de liant de 2% en masse maximum de liant, en particulier entre 0,8 et 1,5% en masse de liant.

5. Procédé selon la revendication 4,
**caractérisé en ce**
qu'une masse volumique apparente entre 28 et 40 kg/cm³ est produite dans la zone de taux accru de liant et une masse volumique apparente entre 20 et 32 kg/m³ est produite dans les autres zones, en particulier voisines.

6. Procédé selon la revendication 1,
**caractérisé en ce**
que des liants anorganiques comme des nanocomposites et/ou en particulier des liants à rupture fragile avec des temps de durcissement courts, comme de l'huile siliceuse, du silicate de soude, du liant au phosphate et/ou une combinaison ou des mélanges de ceux-ci avec ou sans additions de matières synthétiques, sont chargés comme liants dans les zones à taux de liant accru.

7. Procédé selon la revendication 6,
**caractérisé en ce**
que jusqu'à 15% en masse, en particulier entre 5 et 10% en masse de liant anorganique, sont chargés dans les zones de taux accru de liant.

8. Procédé selon la revendication 7,
**caractérisé en ce**
que l'épaisseur de la couche avec un taux accru de liant est réduite en ajoutant une quantité plus importante de liant dans la zone de taux accru de liant.

9. Procédé selon la revendication 1,
**caractérisé en ce**
que des liants déformables plastiquement comme de l'acétate de polyvinyle, de la résine acrylique et/ou de la résine de silicone et/ou des mélanges de ceux-ci sont chargés dans les zones en dehors des zones à taux accru de liant.

10. Procédé selon la revendication 1,
**caractérisé en ce**
que les différents taux de liant sont commandés par des tuyères périphériques intérieures centrales et/ou périphériques extérieures dans la zone d'un appareil désintégrateur.

11. Procédé selon la revendication 10,
**caractérisé en ce**
que des liants différents sont amenés par les tuyères, de préférence en différentes quantités.

12. Procédé selon la revendication 11,
**caractérisé en ce**
que des nanocomposites sont ajoutés par la tuyère centrale et des liants duroplastiques et/ou thermoplastiques sont amenés par les tuyères périphériques.

13. Procédé selon la revendication 1, **caractérisé en ce que** le liant est appliqué après un poste d'oscillation sur l'intissé primaire.

14. Procédé selon la revendication1,
**caractérisé en ce**
que des substances qui humidifient, comme des alcools et/ou des tensides, sont ajoutés au liant à appliquer.

15. Procédé selon la revendication 1 à 14,
**caractérisé en ce**
que le liant se durcit sous pression.

16. Procédé selon les revendications 1 à 15,
**caractérisé en ce**
que l'intissé primaire est comprimé avant et/ou après application du liant et/ou après le dépôt comme intissé secondaire.

17. Procédé selon la revendication 1,
**caractérisé en ce**
que le liant est appliqué en forme de bandes sur au moins une surface de l'intissé primaire dans le sens du transport.

18. Procédé selon la revendication 1,
**caractérisé en ce**
que le liant est appliqué en forme de bandes sur au moins une surface de l'intissé primaire transversalement par rapport au sens du transport.

19. Procédé selon la revendication 1,
**caractérisé en ce**
que le taux de liant est augmenté par l'apport de fibres imprégnées de liants, en particulier de fibres textiles, de verre, de synthèse et/ou de fibres naturelles ainsi que de fibres recyclées, qui sont dispersées de préférence par sections sur un intissé primaire.

20. Procédé selon la revendication 19,
**caractérisé en ce**
que les fibres imprégnées de liants sont appliquées en couches pendant la collecte des fibres minérales sur le dispositif de transport.

21. Procédé selon la revendication 19,
**caractérisé en ce**
que jusqu'à 25% en masse de fibres imprégnées de liants par rapport à la masse totale du lé de matériau isolant sont chargés.

22. Procédé selon la revendication 1,
**caractérisé en ce**
que des fibres minérales non imperméabilisées sont vaporisées pendant l'imprégnation avec des liants, de préférence après le durcissement des liants.

23. Procédé selon la revendication 22,
**caractérisé en ce**
que la vaporisation est effectuée avec des huiles minérales aliphatiques, des huiles végétales et/ou d'autres imperméabilisants qui se répartissent en rampant sur les surfaces des fibres minérales.

24. Elément en matériau isolant en fibres minérales liées à des liants, en particulier en fibres en laine minérale, de préférence en un lé de matériau isolant en fibres minérales, enroulable, à séparer en panneaux séparés, fabriqué selon le procédé selon les revendications 1 à 23, constitué par un corps limité en particulier en surface droite avec deux grandes surfaces placées parallèlement l'une à l'autre et espacées ainsi qu'en particulier avec des surfaces latérales et des surfaces frontales à angle droit par rapport aux grandes surfaces, qui sont placées également à angle droit et espacées l'une de l'autre et qui sont orientées parallèlement, au moins deux zones avec des fibres minérales étant placées sur la largeur de l'élément en matériau isolant dont au moins une zone (22) est configurée avec un taux accru de liant,
**caractérisé en ce**
que la zone de taux accru de liant est comprimée de telle manière que la masse volumique apparente dans cette zone (22) est accrue par rapport à d'autres zones, l'élément en matériau isolant étant séparé sur sa hauteur et/ou largeur en zones de propriétés différentes et que la zone (22) de taux accru de liant s'étend dans le sens longitudinal et est placée au milieu du lé de fibres minérales (1) par rapport à la largeur du lé de fibres minérales (1), cependant que le liant dans la zone (22) est configuré comme une résine synthétique duroplastique, déformable viscoplastique en minces pellicules ou à cassure ductile, comme par exemple un mélange de résine urée-phénol-formaldéhyde, de la résine de mélamine et/ou du polyester.

25. Elément en matériau isolant selon la revendication 24,
**caractérisé en ce**
que la masse volumique apparente dans la zone (22) est située entre 28 et 40 kg/m³ et entre 20 et 32 kg/m3 dans les autres zones, la masse volumique apparente dans la zone (22) étant plus élevée que dans les autres zones.

26. Elément en matériau isolant selon la revendication 24,
**caractérisé en ce**
que la zone (22) du taux accru de liant présente une hauteur et/ou une largeur d'environ 50 à 75%, en particulier de 66% de la largeur totale du lé de fibres minérales (1).

27. Elément en matériau isolant selon la revendication 24,
**caractérisé en ce**
que la zone (22) de taux accru de liant est configurée en forme de bandes.

28. Elément en matériau isolant selon la revendication 24,
**caractérisé en ce**
que la zone (22) de taux accru de liant est configurée de type réseau de quadrillage.

29. Elément en matériau isolant selon la revendication 24,
**caractérisé en ce**
que la zone (22) de taux accru de liant présente une largeur substantiellement constante sur toute la longueur du lé de fibres minérales (1).

30. Elément en matériau isolant selon la revendication 24,
**caractérisé en ce**
que la zone (22) de taux accru de liant est comprimée.

31. Elément en matériau isolant selon la revendication 24,
**caractérisé en ce**
que le liant est configuré dans la zone (22) comme un liant anorganique, par exemple un nanocomposite et/ou en particulier un liant à rupture fragile avec des temps de durcissement courts, comme de l'huile siliceuse, du silicate de soude, du liant au phosphate et/ou des combinaisons ou des mélanges de ceux-ci avec ou sans additions de matières synthétiques.

32. Elément en matériau isolant selon la revendication 24,
**caractérisé en ce**
que le liant en dehors de la zone (22) de taux accru de liant est configuré comme un liant déformable plastiquement comme de l'acétate de polyvinyle, de la résine acrylique et/ou de la résine de silicone et/ou des mélanges de ceux-ci.

33. Elément en matériau isolant selon la revendication 24,
**caractérisé en ce que** la zone (22) entre les grandes surfaces est configurée avec un taux accru de liant allant jusqu'à 15% en masse, de préférence entre 2 et 10% en masse, en particulier entre 2 et 2,5% en masse.
